# EUROPEAN PATENT APPLICATION

(11) **EP 2 846 534 A1**
(43) Date of publication of application: **11.03.2015**
(21) Application number: 14183401.0
(22) Date of filing: 03.09.2014
(51) Int. Cl.: H04N 5/343, H04N 5/347, H04N 5/361, H04N 5/365

(54) **Imaging apparatus and image correction data generating method**

(30) Priority: 06.09.2013 JP 2013185281
(71) Applicant: Fujifilm Corporation, Minato-ku Tokyo (JP)
(72) Inventor: Tanaka, Yasutake, Kanagawa (JP)
(74) Representative: Klunker . Schmitt-Nilson . Hirsch

(57) **Abstract**

It is an imaging apparatus that outputs subject capture images having a plurality of kinds of number of pixels by binning imaging in which pixel addition of a plurality of pixels of an imaging device is performed, including: a correction information storage unit that stores a dark correction file storing an image correction data for one screen of the imaging device, a correction calculation data generating unit that generates a correction calculation data by obtaining a correction calculation value corresponding to each pixel of the subject capture image from the image correction data when the number of pixels of the subject capture image is different from the number of pixels of the image correction data; and an image correcting unit that corrects each pixel of the subject capture image by using the correction calculation value of a corresponding pixel position of the correction calculation data.

## Description

### BACKGROUND

### 1. Technical Field

The present invention relates to an imaging apparatus and a method of generating an image correction data.

### 2. Related Art

For an imaging device used for an imaging apparatus, such as, a charge coupled device (CCD) type image sensor or a complementary metal-oxide semiconductor (CMOS) type image sensor, various dark correction methods for correcting a noise component, such as dark current noise, have been proposed. In a dark correction method of Patent Literature 1 (JP-A-2010-147816), a subject capture image is obtained by imaging a subject by an imaging device, and a black capture image is obtained by imaging the subject again in a state where the imaging device is shaded. Then, an image signal of the black capture image signal is subtracted from an image signal of the subject capture image to generate image data which has been subjected to dark correction processing.

### SUMMARY OF INVENTION

As described above, when performing dark correction processing, it is required to perform both imaging of obtaining a subject capture image and imaging of obtaining a black capture image as a set whenever a subject is imaged. This prolongs an imaging time. Therefore, it may be considered that a black capture image is obtained in advance, and is recorded as image correction data. However, when performing, for example, binning imaging in which a plurality of pixels is pixel-added, it is required to prepare black capture images corresponding to the numbers of pixels of capture images by the number of the kinds of binning imaging. Accordingly, many kinds of black capture images are imaged, which causes a time for generating the image correction data to be enormously increased and a manufacturing process to be complicated. This also increases a capacity of a memory which stores each image correction data required for an imaging apparatus.

Therefore, an object of the present invention is to provide an imaging apparatus and a method of generating image correction data, in which a manufacturing process may not be complicated, a capacity of image correction data for dark correction processing which are stored in an imaging apparatus may be decreased, and dark correction processing may be performed in a short time.

An aspect of the present invention provides an imaging apparatus that outputs subject capture images having a plurality of kinds of number of pixels by binning imaging in which pixel addition of a plurality of pixels of an imaging device is performed, the imaging apparatus comprising: a correction information storage unit that stores fewer dark correction files storing an image correction data for one screen of the imaging device than the kinds of number of pixels of the subject capture images; a correction calculation data generating unit that generates a correction calculation data by obtaining a correction calculation value corresponding to each pixel of the subject capture image from the image correction data when the number of pixels of the subject capture image is different from the number of pixels of the image correction data; and an image correcting unit that corrects each pixel of the subject capture image by using the correction calculation value of a corresponding pixel position of the correction calculation data by a pixel unit.

Another aspect of the present invention provides an image correction data generating method of the imaging apparatus, wherein, when the number of the pixel addition in imaging the black capture image is n pixels where n is a positive integer, and the number of the pixel addition in imaging the subject capture image is m pixels where m is a positive integer, an exposure time in imaging the black capture image is set to m/n of an exposure time of imaging the subject capture image.

According to any of aspects of the present invention, a manufacturing process may not be complicated, a capacity of image correction data for dark correction processing which may be stored in an imaging apparatus may be decreased, and dark correction processing may be performed in a short time.

### BRIEF DESCRIPTION OF DRAWINGS

FIG. 1 is an external perspective view illustrating an example of a fluorescence detecting system, which is for explaining an exemplary embodiment of the present invention.
FIG. 2 is a vertical cross-sectional view of an image generating device illustrated in FIG. 1.
FIG. 3 is a block diagram of an imaging unit.
FIG. 4 is a plan view illustrating a schematic configuration of a CCD-type imaging device.
FIG. 5 is a flow chart illustrating a sequence of dark correction processing.
FIGS. 6A and 6B are explanatory views schematically illustrating an example of resizing an image correction data.

### DESCRIPTION OF EMBODIMENTS

Hereinafter, an exemplary embodiment of the present invention will be described in detail with reference to drawings. Here, descriptions will be made on, as an example of an imaging apparatus, a fluorescence detecting system which displays a fluorescent image that is imaged by radiating excitation light to an observation object including a fluorescent substance.

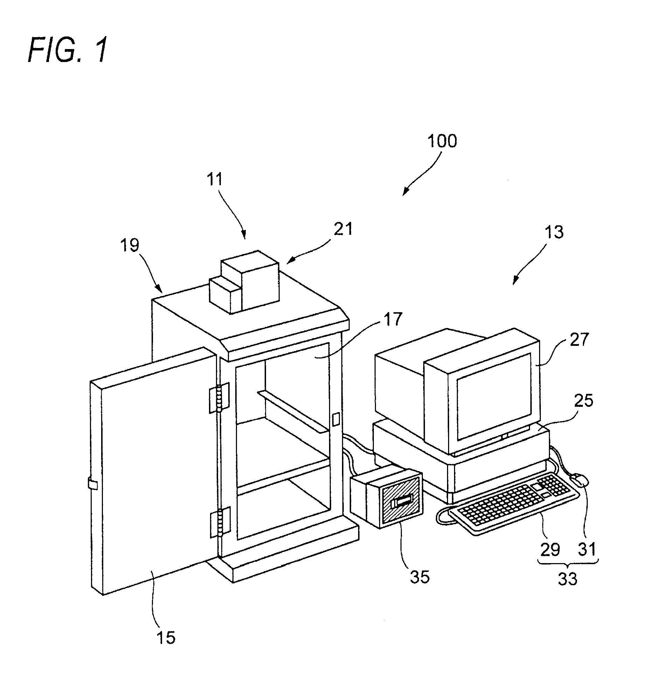

FIG. 1 is an external perspective view illustrating an example of a fluorescence detecting system for explaining the exemplary embodiment of the present invention. A fluorescence detecting system 100, if necessary, performs appropriate image processing on a subject image imaged by radiating excitation light toward an observation object in a dark box, and displays the subject image on a display unit. The fluorescence detecting system 100 mainly includes an image generating device 11 including an imaging apparatus, and an image processing device 13.

The image generating device 11 includes a case 19 and an imaging unit 21 disposed at the top of the case 19. The case 19 is formed in a substantially rectangular parallelepiped shape, and has a cover 15 attached to be opened and closed, and a hollow portion 17.

The image processing device 13 is constituted by a personal computer, and has a main body 25, a display unit 27 such as a monitor, and an input unit 33 such as a keyboard 29 or a mouse 31.

The main body 25 has a storage unit (although not illustrated) such as a hard disk. In the storage unit, for example, a control program, and various data required for a control are stored. Also, image data of a subject capture image obtained by imaging a subject by the image generating device 11 may be stored in the storage unit.

The display unit 27 is constituted by, for example, a CRT or a liquid crystal display, and displays information of the image imaged by the image generating device 11. Besides the display unit 27, there is provided a sub-monitor 35 configured to display, for example, a screen through which various settings or commands may be performed on the image generating device 11.

The input unit 33 receives various commands to the image processing device 13 when a user operates the keyboard 29 or the mouse 31.

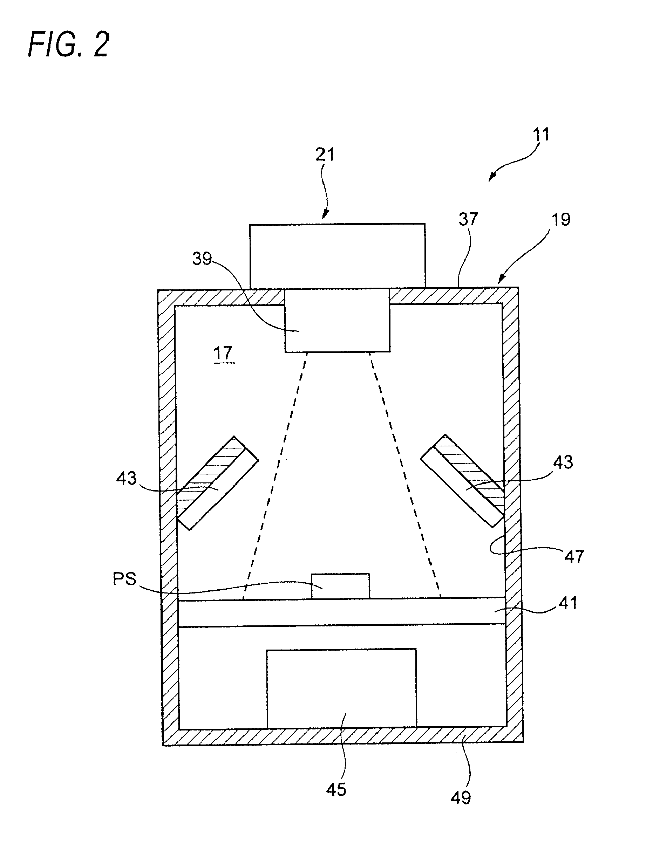

FIG. 2 is a vertical cross-sectional view of the image generating device 11 illustrated in FIG. 1. As illustrated in the drawing, the image generating device 11 includes the imaging unit 21 which is disposed at a top portion 37 of the case 19 and has a lens unit 39, a subject placement unit 41 provided within the case 19, on which an observation object PS is disposed, and an incident light source 43 and a transmission light source 45 which are configured to radiate excitation light to the observation object PS disposed on the subject placement unit 41.

The incident light source 43 is fixed to a case inner wall 47 at the imaging unit 21 side of the observation object PS, and the transmission light source 45 is disposed on a case bottom surface 49 at the opposite side to the imaging unit 21 side of the observation object PS. When the image generating device 11 is set to a fluorescent sample photographing mode, excitation light is irradiated to the observation object PS from at least one of the incident light source 43 and the transmission light source 45 according to the observation object PS.

The case 19 constitutes a dark box in which external light does not enter the inside of the hollow portion 17 when the cover 15 as illustrated in FIG. 1 is closed.

The image generating device 11 outputs image data of a subject capture image obtained by imaging the observation object PS to the image processing device 13. The image processing device 13, if necessary, performs image processing on the input image data and displays the processed image data on the display unit 27.

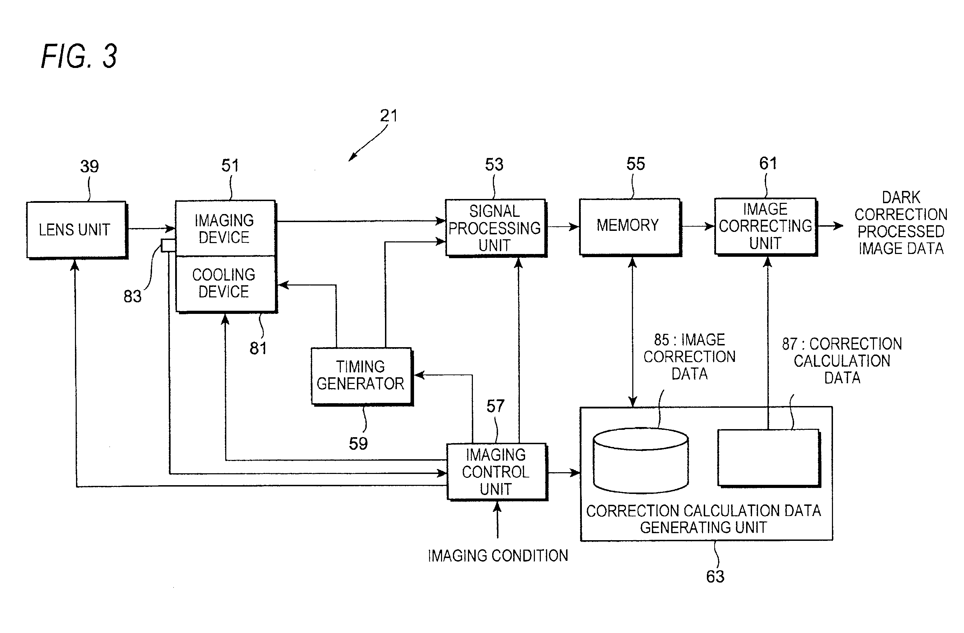

Hereinafter, detailed descriptions will be made on the imaging unit 21 as an imaging apparatus provided in the image generating device 11. FIG. 3 illustrates a block diagram of the imaging unit 21.

The imaging unit 21 mainly includes the lens unit 39, an imaging device 51, a signal processing unit 53, a memory 55, an imaging control unit 57, and a timing generator 59, and further includes an image correcting unit 61 and a correction calculation data generating unit 63.

Although not illustrated, the lens unit 39 includes, for example, a lens group constituted by a plurality of optical lenses, a diaphragm adjustment mechanism, a zoom mechanism, and an auto-focusing mechanism.

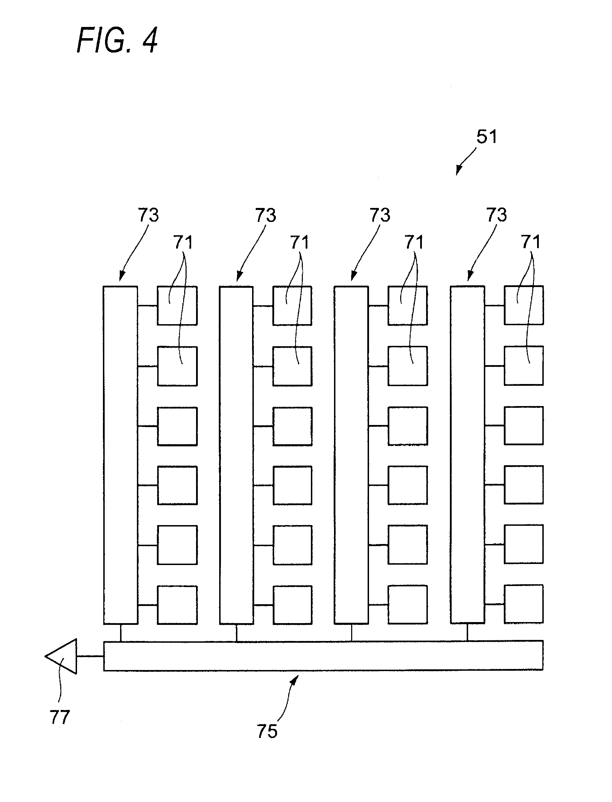

The imaging device 51, in the present configuration, employs a CCD-type image sensor in which a plurality of pixels is two-dimensionally arranged. FIG. 4 is a plan view illustrating a schematic configuration of the CCD-type imaging device. The imaging device 51 includes, for example, light receiving portions 71 corresponding to the plurality of pixels, vertical charge transfer paths 73, a horizontal charge transfer path 75, and a charge-voltage conversion amplifier (a floating diffusion amplifier) 77. The imaging device 51 may perform binning imaging according to a driving signal from the timing generator 59 illustrated in FIG. 3, in which pixel addition is selectively performed on signal charges accumulated in the respective light receiving portions 71 through exposure with signal charges accumulated in light receiving portions with other pixels. The pixel addition method may be performed by a conventionally known method, for example, on the vertical charge transfer paths 73 or the horizontal charge transfer path 75 or both.

As illustrated in FIG. 3, when receiving input of the driving signal from the timing generator 59 based on a command from the imaging control unit 57, the imaging device 51 performs imaging processing based on the driving signal. The imaging device 51 photoelectrically converts light from the observation object PS guided through the lens unit 39, and outputs a photoelectrically converted image signal of the subject capture image to the signal processing unit 53.

The imaging device 51 includes a cooling device 81 such as a Peltier element, and a temperature sensor 83 configured to detect the temperature of the imaging device 51. The imaging control unit 57 drives the cooling device 81 to cool the imaging device 51, and performs a feed-back control of the cooling device 81 based on the temperature detection signal from the temperature sensor 83 so as to maintain the imaging device 51 at a constant temperature. Specifically, the imaging control unit 57 cools the imaging device 51 by performing a pulse width modulation (PWM) control on the cooling device 81 while monitoring the temperature of the imaging device 51 detected by the temperature sensor 83. The cooling of the imaging device 51 may suppress the generation of a dark current noise, and the maintaining of a constant temperature may maintain a constant time variation of the dark current noise.

The signal processing unit 53 includes, for example, a CDS circuit which is controlled based on a timing signal from the timing generator 59, and performs correlated double sampling (CDS) on an input analog signal, and an analog/digital (A/D) converter which converts the CDS-processed analog signal to a digital signal. The signal processing unit 53 outputs a digital image data obtained by processing the image signal output from the imaging device 51 to the memory 55.

The memory 55 temporarily stores the input digital image data.

In the correction calculation data generating unit 63, a dark correction file which stores an image correction data 85 for one screen of the imaging device 51 is registered in advance. The image correction data 85 is information indicating noise distribution including a unique dark current noise of the imaging device 51 on the screen, and may be generated by using a black capture image imaged by the imaging device 51 in a shaded state at the time of shipment from a manufacturing factory of the apparatus. The black capture image may be data with a maximum number of pixels detected from all pixels of the imaging device 51, or data with a number of pixels obtained through binning imaging with a certain pixel addition number (m).

The image correction data 85 is constituted by luminance correction values for one screen recorded with a specific number of pixels according to presence/absence of binning imaging or a pixel addition number, and is registered as a dark correction file in the correction calculation data generating unit 63. The image correction data 85 is registered in the correction calculation data generating unit 63. The number of the registered image correction data 85 is fewer than the number of kinds of pixels for a plurality of kinds of numbers of pixels of subject capture images output through binning imaging by the imaging device 51. As for the image correction data 85, only at least one kind of data may be registered in the correction calculation data generating unit 63.

The imaging control unit 57 is constituted by computer hardware which includes, for example, a CPU, a ROM, a RAM, or a non-volatile ROM (not illustrated), and a control program for controlling the imaging unit 21 is stored in the non-volatile ROM. The CPU reads out and executes the control program to control respective units connected to the imaging control unit 57.

The imaging control unit 57 controls the respective units connected thereto to image the observation object PS disposed on the subject placement unit 41. The image data of the subject capture image is subjected to arithmetic processing by the image correcting unit 61 by using a correction calculation data 87 obtained from the correction calculation data generating unit 63 to be described later in detail. The image correcting unit 61 transmits the image data after the arithmetic processing to the image processing device 13. The image data after the arithmetic processing becomes image data, from which a dark current noise has been removed, after the dark correction.

Hereinafter, descriptions will be made on a sequence for performing dark correction processing by the image generating device 11 as configured as described above.

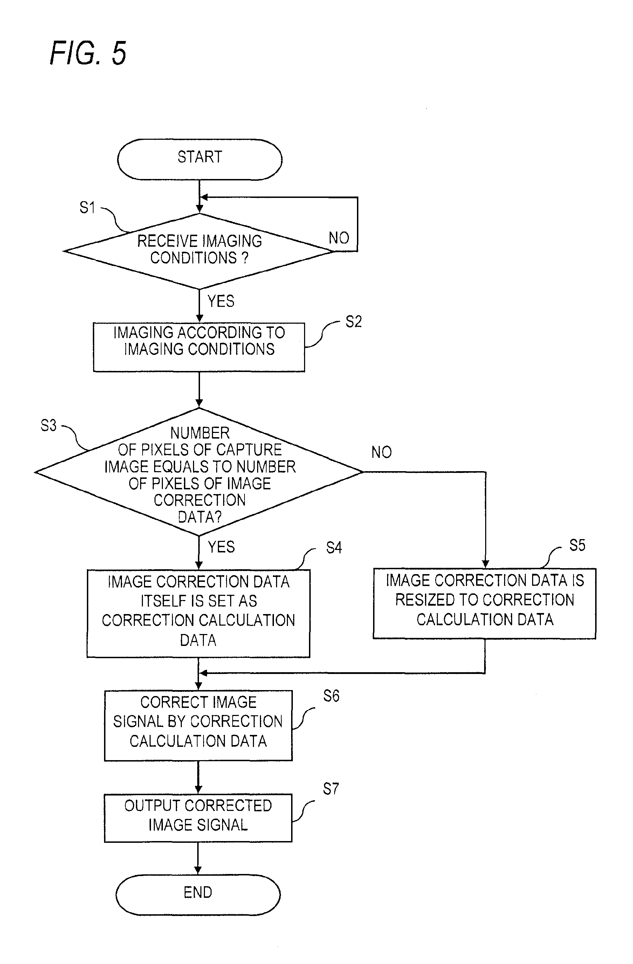

FIG. 5 is a flow chart illustrating a sequence of dark correction processing. First, a user of the fluorescence detecting system 100 opens the cover 15 of the image generating device 11 illustrated in FIG. 1 and places an observation object PS on the subject placement unit 41 within the case. The user closes the cover 15 so that external light does not enter the inside of the case 19.

Then, the user operates the input unit 33 of the image processing device 13 or displays a setting screen on the sub-monitor 35 to set various kinds of imaging conditions. The imaging conditions may include, for example, a pixel addition number, and an exposure time in a case of binning imaging. The user inputs imaging conditions and instructs initiation of imaging. When the imaging initiation is instructed, the imaging conditions set by the user are transmitted to the imaging unit 21.

The imaging control unit 57 (see FIG. 3) of the imaging unit 21 determines whether the imaging conditions are received (S1), and stands by until the imaging conditions are received. When the imaging control unit 57 receives the imaging conditions, imaging is initiated according to the imaging conditions (S2).

The imaging control unit 57 controls, for example, the timing generator 59 so that imaging is executed according to the imaging conditions. The timing generator 59 generates a reset signal, a vertical synchronizing signal, and a horizontal synchronizing signal, outputs generated signals to the imaging device 51, and outputs a sampling signal to the CDS circuit of the signal processing unit 53 so that pixel addition is performed on imaging signals with the set pixel addition number.

Accordingly, the image signal which is obtained through binning imaging and output from the imaging device 51 and then passes through the signal processing unit 53 is input to the memory 55. In the memory 55, the subject capture image is stored.

The imaging control unit 57 outputs information on the set imaging conditions to the correction calculation data generating unit 63. The correction calculation data generating unit 63 compares the number of pixels of the subject capture image stored in the memory 55 to the number of pixels of the image correction data 85 stored in advance (S3). When both have the same number of pixels, the imaging control unit 57 outputs the image correction data 85 itself as the correction calculation data 87 to the image correcting unit 61 (S4).

When both are different from each other in the number of pixels, the imaging control unit 57 obtains each correction calculation value for a position of each pixel of the subject capture image obtained through binning imaging based on the image correction data 85 to generate the correction calculation data 87. That is, the imaging control unit 57 resizes the image correction data 85 to generate the correction calculation data 87 (S5). The imaging control unit 57 outputs the generated correction calculation data 87 to the image correcting unit 61.

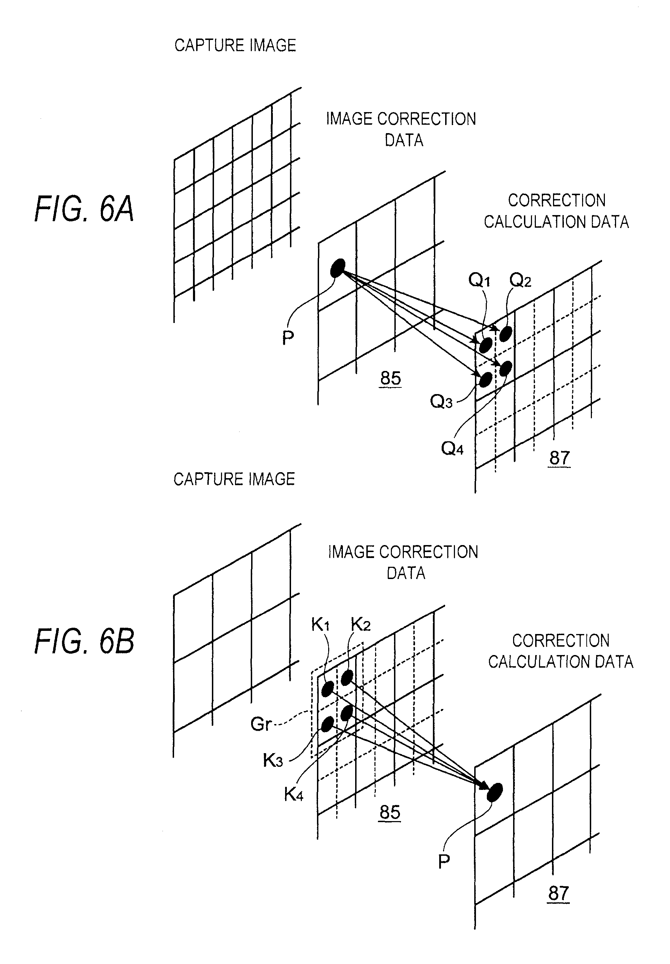

FIGS. 6A and 6B schematically illustrate an example of resizing the image correction data 85. As illustrated in FIG. 6A, when the number of pixels of the subject capture image is larger than the number of pixels of the image correction data 85, a luminance correction value of one pixel (e.g., P) of the image correction data 85 is allocated to a plurality of pixel positions (Q1, Q2, Q3 and Q4) of the subject capture image corresponding to the one pixel (P) to generate the correction calculation data 87.

In contrast, as illustrated in FIG. 6B, when the number of pixels of the subject capture image is smaller than the number of pixels of the image correction data 85, in a pixel group (e.g., Gr) constituted by a plurality of pixels of the image correction data 85 corresponding to each pixel of the subject capture image, pixel addition is performed on respective luminance correction values of respective pixels (K1, K2, K3, and K4) in the pixel group (Gr) of the image correction data 85 to obtain a correction calculation value and to generate the correction calculation data 87.

The above-described example is merely an example. Resizing may be properly performed in the same manner even when the number of pixels to be allocated, the pixel addition number, or the pixel position are different from those in the example as described above.

Then, the image correcting unit 61 performs correction processing on the subject capture image by using the correction calculation data 87 adapted to the number of pixels of the subject capture image (S6). That is, the image correcting unit 61 subtracts the correction calculation value of the corresponding pixel position of the correction calculation data 87 from each pixel value of the subject capture image so as to generate a corrected image. The image data of the corrected image is output to the image processing device 13 of FIG. 1 (S7).

The correction calculation data generating unit 63 may perform processing of a low pass filter (LPF) on the correction calculation data 87 obtained through resizing. In this case, correction calculation values of respective pixels of the correction calculation data 87 become smooth screen distribution so that a corrected image in which a high frequency noise component is further reduced is obtained.

The subject capture image which has been subjected to the dark correction processing, if necessary, is subjected to image processing by the image processing device 13, as illustrated in FIG. 1, so as to be displayed as a high quality image on the display unit 27.

In the present fluorescence detecting system 100, in order to detect weak fluorescence generated from the observation object PS, the imaging device 51 is cooled and then the generation of a dark current is reduced. However, imaging with exposure for several tens of minutes or a long time may overlap a dark current noise with a subject capture image, thereby causing a reduction of an image quality. In this case, a unique noise component (a luminance correction value) of a device which includes a dark current noise of the imaging device 51 may be obtained in advance, and a noise component obtained from each pixel value of the subject capture image may be subtracted by a pixel unit to obtain a high quality image.

The image correction data 85 which is distribution data of luminance correction values on the screen is resized according to the number of pixels of the subject capture image, converted into the correction calculation data 87, and subtracted from the subject capture image. Accordingly, even when the number of pixels of the subject capture image is changed by, for example, a pixel addition number of binning imaging, the correction calculation data 87 having the same number of pixels as the number of pixels of the subject capture image may be generated through resizing by using the image correction data 85 prepared in advance. Accordingly, in the present configuration, it is not required to prepare many kinds of image correction data 85 in advance according to a plurality of kinds of subject capture images generated according to, for example, the kinds of pixel addition of binning imaging. Only at least one kind of image correction data 85 may be prepared. Accordingly, the generation of the image correction data 85 may be completed by imaging a black capture image only once. This may reduce the need for generating the image correction data 85, thereby reducing the generation time. Also, a memory capacity for storing the generated image correction data 85 may be reduced. It is not required to image a black capture image for dark correction every time a subject is imaged. Thus, the imaging time may be reduced.

In generating the image correction data 85, when the black capture image is obtained through binning imaging by the imaging device 51, the dark current noise equivalent to that of the case in which binning imaging is not performed may be detected in a short time. For example, when the black capture image is generated by binning imaging in which pixel addition of 4×4 pixels is performed, the imaging time is only 1/16 times the case where the binning imaging is not performed. Likewise, when the pixel addition is performed by 8×8 pixels instead of 4×4 pixels, the equivalent dark current noise may be detected by 1/4 of an exposure time for 4×4 pixels.

In imaging the subject by the imaging unit 21, in a case where the conditions for binning imaging are set to substantially constant conditions, when the black capture image is imaged by the following conditions, it is possible to generate the image correction data 85 for obtaining a necessary and sufficient correction accuracy in a short time. When the pixel addition number in imaging the black capture image is n pixels (n is a positive integer), and the pixel addition number in imaging the subject by the imaging device is m pixels (m is a positive integer), the exposure time in imaging the black capture image is set to m/n of an exposure time of imaging the subject. The black capture image may be imaged by the exposure time of the relationship to efficiently obtain the image correction data 85. Thus, the manufacturing process may be simplified, and the production efficiency may be improved.

As described above, the present invention is not limited to the exemplary embodiment. The person skilled in the art may combine respective components of the exemplary embodiment, or change or modify the present invention based on description of the specification and the conventionally known technology within a scope of protection of the present invention.

For example, in the configuration example as described above, as for the imaging device 51, a monochrome CCD-type image sensor is used. But the present invention is not limited thereto, and a CMOS-type image sensor may be used. Also, another color imaging device may be employed which has RGB color filters of a primary color system, CMY color filters of a complementary color system, and other patterns including a combination of these colors with other colors.

As described above, the description of embodiments discloses the following matters.
(1) It is an imaging apparatus that outputs subject capture images having a plurality of kinds of number of pixels by binning imaging in which pixel addition of a plurality of pixels of an imaging device is performed, the imaging apparatus comprising: a correction information storage unit that stores fewer dark correction files storing an image correction data for one screen of the imaging device than the kinds of number of pixels of the subject capture images; a correction calculation data generating unit that generates a correction calculation data by obtaining a correction calculation value corresponding to each pixel of the subject capture image from the image correction data when the number of pixels of the subject capture image is different from the number of pixels of the image correction data; and an image correcting unit that corrects each pixel of the subject capture image by using the correction calculation value of a corresponding pixel position of the correction calculation data.
(2) It is the imaging apparatus of (1), wherein the image correction data is generated based on a black capture image imaged by the imaging device in a shaded state.
(3) It is the imaging apparatus of (1) or (2), wherein when the number of pixels of the subject capture image is smaller than the number of pixels of the image correction data, the correction calculation data generating unit obtains the correction calculation value by pixel addition on respective pixels in each pixel group of the image correction data to generate the correction calculation data, and the pixel group is constituted by the respective pixels of the image correction data and corresponds to a position of each pixel of the subject capture image.
(4) It is the imaging apparatus of (1) or (2), wherein when the number of pixels of the subject capture image is larger than the number of pixels of the image correction data, the correction calculation data generating unit allocates as the correction calculation value, a pixel value of one pixel of the image correction data to a plurality of pixel positions of the subject capture image corresponding to said one pixel to generate the correction calculation data.
(5) It is the imaging apparatus of (4), wherein after the correction calculation data generating unit allocates the pixel value of the one pixel to the plurality of pixel positions of the correction calculation data, the correction calculation data generating unit performs processing of a low pass filter on respective correction calculation values of the correction calculation data.
(6) It is the imaging apparatus of any one of (1) to (5), further comprising an imaging device cooling unit that maintains a constant temperature of the imaging device by cooling the imaging device.
(7) The imaging apparatus of any one of (1) to (6), wherein the image correction data is generated based on a black capture image imaged through the binning imaging by the imaging device in the shaded state.
(8) It is an image correction data generating method of the imaging apparatus of (7), wherein, when the number of the pixel addition in imaging the black capture image is n pixels where n is a positive integer, and the number of the pixel addition in imaging the subject capture image is m pixels where m is a positive integer, an exposure time in imaging the black capture image is set to m/n of an exposure time of imaging the subject capture image.

## Claims

1. An imaging apparatus that outputs subject capture images having a plurality of kinds of number of pixels by binning imaging in which pixel addition of a plurality of pixels of an imaging device is performed, the imaging apparatus comprising:
a correction information storage unit that stores fewer dark correction files storing an image correction data for one screen of the imaging device than the kinds of number of pixels of the subject capture images,
a correction calculation data generating unit that generates a correction calculation data by obtaining a correction calculation value corresponding to each pixel of the subject capture image from the image correction data when the number of pixels of the subject capture image is different from the number of pixels of the image correction data; and
an image correcting unit that corrects each pixel of the subject capture image by using the correction calculation value of a corresponding pixel position of the correction calculation data.

2. The imaging apparatus of claim 1, wherein the image correction data is generated based on a black capture image imaged by the imaging device in a shaded state.

3. The imaging apparatus of claim 1 or 2, wherein when the number of pixels of the subject capture image is smaller than the number of pixels of the image correction data, the correction calculation data generating unit obtains the correction calculation value by pixel addition on respective pixels in each pixel group of the image correction data to generate the correction calculation data, and
the pixel group is constituted by the respective pixels of the image correction data and corresponds to a position of each pixel of the subject capture image.

4. The imaging apparatus of claim 1 or 2, wherein when the number of pixels of the subject capture image is larger than the number of pixels of the image correction data, the correction calculation data generating unit allocates as the correction calculation value, a pixel value of one pixel of the image correction data to a plurality of pixel positions of the subject capture image corresponding to said one pixel to generate the correction calculation data.

5. The imaging apparatus of claim 4, wherein after the correction calculation data generating unit allocates the pixel value of the one pixel to the plurality of pixel positions of the correction calculation data, the correction calculation data generating unit performs processing of a low pass filter on respective correction calculation values of the correction calculation data.

6. The imaging apparatus of any one of claims 1 to 5, further comprising an imaging device cooling unit that maintains a constant temperature of the imaging device by cooling the imaging device.

7. The imaging apparatus of any one of claims 1 to 6, wherein the image correction data is generated based on a black capture image imaged through the binning imaging by the imaging device in the shaded state.

8. An image correction data generating method of the imaging apparatus of claim 7, wherein, when the number of the pixel addition in imaging the black capture image is n pixels where n is a positive integer, and the number of the pixel addition in imaging the subject capture image is m pixels where m is a positive integer, an exposure time in imaging the black capture image is set to m/n of an exposure time of imaging the subject capture image.
